# EUROPEAN PATENT SPECIFICATION

(11) **EP 3 872 208 B1**
(45) Date of publication and mention of the grant of the patent: **19.03.2025**
(21) Application number: 19875257.8
(22) Date of filing: 08.10.2019
(51) Int. Cl.: C22C 38/08, C22C 38/02, C22C 38/04, C22C 38/06, C22C 38/00, C21D 9/46, C21D 8/02, C21D 6/00, C21D 1/18, C21D 1/26

(54) **STEEL PLATE FOR PRESSURE VESSEL WITH EXCELLENT CRYOGENIC TOUGHNESS AND ELONGATION RESISTANCE AND MANUFACTURING METHOD THEREOF**
STAHLPLATTE FÜR DRUCKBEHÄLTER MIT AUSGEZEICHNETER TIEFTEMPERATURZÄHIGKEIT UND DEHNUNGSWIDERSTAND SOWIE VERFAHREN ZU IHRER HERSTELLUNG
PLAQUE D'ACIER DESTINÉE À UN RÉCIPIENT SOUS PRESSION PRÉSENTANT UNE EXCELLENTE TÉNACITÉ CRYOGÉNIQUE ET UNE EXCELLENTE RÉSISTANCE À L'ALLONGEMENT ET SON PROCÉDÉ DE FABRICATION

(30) Priority: 26.10.2018 KR 20180128760
(43) Date of publication of application: 01.09.2021
(73) Proprietor: POSCO Co., Ltd, Pohang-si, Gyeongsangbuk-do 37859 (KR)
(72) Inventor: HONG, Soon-Taik, Pohang-si, Gyeongsangbuk-do 37877 (KR)
(74) Representative: Meissner Bolte Partnerschaft mbB
(86) International application number: PCT/KR2019/013214
(87) International publication number: WO 2020/085684

(56) References cited:
- WO-A1-2017/111290
- CN-A- 104 831 165
- JP-A- 2004 285 456
- JP-A- 2015 086 403
- JP-A- 2016 176 141
- JP-A- 2016 183 387
- JP-A- H07 109 544
- JP-A- S61 221 327
- KR-A- 20160 063 532
- KR-B1- 101 702 480

## Description

### [Technical Field]

The present invention relates to a steel plate used for low temperature pressure vessels, ships, storage tanks, structural steel, or the like, and a method of manufacturing the same, and more particularly, to a steel plate for a 700 MPa class low temperature pressure vessel, having excellent cryogenic toughness and ductility, and a method of manufacturing the same.

### [Background Art]

A high-strength thick plate steel for low temperatures is comprised of a mixture structure of tempered martensite structure, retained austenite and tempered bainite structure, and since such a steel material should be able to be used as a cryogenic structural material during construction, cryogenic toughness and ductility are required.

On the other hand, as such, the high-strength structural steel for cryogenic use is required for excellent cryogenic toughness and ductility, and high strength hot-rolled steel manufactured through the related art normalizing treatment has a mixed structure of ferrite and pearlite. As an example thereof, the invention described in Patent Document 1 may be provided.

The patent document 1 discloses that the high-strength steel for 500MPa-class LPG is comprised of, in % by weight, C: 0. 08 to 0.15%, Si: 0.2 to 0.3%, Mn: 0.5 to 1.2%, P: 0.01 to 0. 02%, S: 0.004 to 0.006%, Ti: more than 0% to 0.01% or less, Mo : 0.05 to 0.1%, Ni: 3.0 to 5.0%, a balance of Fe, and other unavoidable impurities, and it is characterized by the addition of Ni and Mo in the steel composition.

However, the invention described in the above publication has a problem that the cryogenic toughness and ductility of the steel material are insufficient even when Ni or the like is added, since the steel material is manufactured through general normalizing.

Therefore, in high-strength thick steel plates used for low temperature pressure vessels, ships, storage tanks, structural steels, and the like, there is a demand for the development of high-strength steel having excellent cryogenic toughness and ductility.

A low temperature pressure vessel steel plate having a tensile strength of 600 MPa or more and low temperature toughness is for example disclosed in WO2017111290A1.

### [Prior technical literature]

### [Patent Literature]

(Patent Document 1) Korean Patent Publication No. 2012-0011289
(Patent Document 2) WO2017111290A1

### [Disclosure]

### [Technical Problem]

Therefore, to prevent the problems of the related art, an aspect of the present invention is to provide a steel plate for a low-temperature pressure vessel, in which a structure of a steel manufactured by controlling a cooling and heat treatment process is provided as a mixed structure of tempered bainite and tempered martensite, and thus a tensile strength of 700 MPa class may be secured, a method of manufacturing the same.

### [Technical Solution]

The invention is defined in the appended claims.

According to an aspect of the present invention, a steel plate for a low temperature pressure vessel having excellent cryogenic toughness and ductility comprises, in weight%, 0.05 to 0.15% of C, 0.20 to 0.40% of Si, 0.3 to 0.6% of Mn, 0.001 to 0.05% of Al, 0.012% or less of P, 0.015% or less of S, 4.0 to 5.0% of Ni, 0.001 to 0.10% of In, a balance of Fe, and unavoidable impurities. A steel microstructure of the steel plate is comprised of 15 to 80 area% of tempered bainite and a balance tempered martensite. The steel plate satisfies a tensile strength of 700 MPa class and may be stably used at a low temperature of -150°C.

The In may be contained in a range of 0.05 to 0.08 weight%.

According to another aspect of the present invention, a method of manufacturing a steel plate for a low temperature pressure vessel having excellent cryogenic toughness and ductility, includes:
reheating a steel slab at 1050 to 1250°C, the steel slab containing, in weight%, 0.05 to 0.15% of C, 0.20 to 0.40% of Si, 0.3 to 0.6% of Mn, 0.001 to 0.05% of Al, 0.012% or less of P, 0.015% or less of S, 4.0 to 5.0% of Ni, 0.001 to 0.10% of In, a balance of Fe, and unavoidable impurities;
hot rolling the reheated steel slab at a reduction ratio of 5 to 30% per pass, and terminating rolling at a temperature of 800°C or higher;
primary water cooling the hot-rolled steel plate at a cooling rate of 2.5 to 50°C/sec within 30 seconds after hot rolling;
performing an intermediate heat treatment on the primary cooled steel plate for {2.4×t + (10-30)} minutes at a temperature of 690 to 760°C, where t is a thickness (mm) of a steel plate, and then, secondary water cooling the steel plate to room temperature at a cooling rate of 2.5 to 50°C/sec; and
tempering the secondary cooled steel plate for {2.4×t + (10 - 30)} minutes at a temperature of 600 to 670°C, where t is a thickness (mm) of a steel plate.

A steel microstructure obtained by the tempering is comprised of 15 to 80 area% of tempered bainite and a remainder of tempered martensite.

### [Advantageous Effects]

According to an exemplary embodiment of the present invention having the configuration as described above, provided is a steel plate for a low-temperature pressure vessel having excellent toughness and ductility, which may be stably used at a low temperature of about -150°C while satisfying the tensile strength of 700 MPa class.

### [Best Mode for Invention]

Hereinafter, the present invention will be described in detail.

First, a steel plate for a low-temperature pressure vessel having excellent low-temperature toughness and ductility according to an aspect of the present invention includes, in % by weight, C: 0.05 to 0.15%, Si: 0.20 to 0.40%, Mn: 0.3 to 0.6%, Al: 0.001 to 0.05%, P: 0.012% or less, S: 0.015% or less, Ni: 4.0 to 5.0%, In: 0.001 to 0.10%, balance Fe and unavoidable impurities. Detailed steel composition components and reasons for limiting the components are as follows, and in the following description of the steel composition components, % indicates weight%.

### C: 0.05-0.15%

In the present invention, the C content in the steel plate is limited to the range of 0.05 to 0.15%. If the C content is less than 0.05%, the strength of the matrix itself is lowered, and if exceeding 0.15%, the weldability of the steel plate is greatly impaired.

### Si: 0.20-0.40%

In the present invention, Si is a component added for the deoxidation effect, the solid solution strengthening effect, and the effect of increasing the impact transition temperature, and it is added at 0.20% or more to obtain such an addition effect. However, if it is added in excess of 0.40%, the weldability decreases and the oxide film is severely formed on the surface of the steel plate, and thus, the content is limited to 0.20 to 0.40%.

### Mn: 0.3-0.6%

In the present invention, since Mn forms MnS, which is an elongated non-metallic inclusion, together with S, lowering the room temperature elongation and low temperature toughness, the Mn content is limited to 0.6% or less. However, if Mn is less than 0.3% due to the nature of the components in the present invention, it is difficult to secure an appropriate strength, and thus, the amount of Mn is limited to be 0.3 to 0.6%.

### Al: 0.001-0.05%

In the present invention, Al, along with Si, is one of the strong deoxidizing agents in the steelmaking process, and the effect thereof is insignificant if the Al content is less than 0.001%, and if it is added in excess of 0.05%, manufacturing costs may increase, and thus, the content is limited to 0.001 to 0.05%.

### P: 0.012% or less

In the present invention, P is an element that impairs low-temperature toughness, but it requires excessive cost to remove P in the steelmaking process, and thus, the P content is limited to be 0.012% or less.

### S: 0.015% or less

In the present invention, S is also an element that adversely affects low-temperature toughness along with P, but since it may take an excessive cost to remove S in the steelmaking process similarly to P, the S content is limited to be 0.015% or less.

### Ni: 4.0-5.0%

In the present invention, Ni is the most effective element for improving low-temperature toughness. However, if the amount thereof is less than 4.0%, the low-temperature toughness decreases, and if the amount exceeds 5.0%, manufacturing costs may increase. Therefore, Ni is added within the range of 4.0 to 5.0%.

### In: 0.001-0.1%

In the present invention, In is a low melting point metal and is an important element that increases ductility. However, if the amount is less than 0.001%, the effect of the addition cannot be expected, and if it is added in excess of 0.1%, it may appear as coarse precipitates during the continuous casting process and may impair the low-temperature toughness. Therefore, the In content is limited to 0.001 to 0.1%.

More preferably, In may be added in the range of 0.05 to 0.08%.

The steel plate of the present invention has a steel microstructure comprised of 15 to 80 area% of tempered bainite and the remainder of tempered martensite. If the tempered bainite fraction is less than 15%, the amount of tempered martensite is excessive, and the low-temperature toughness of the steel plate may be deteriorated. On the other hand, if it exceeds 80%, it may be difficult to secure the target strength of the steel plate.

The steel plate having the above-described steel composition component and microstructure has excellent ductility and low temperature toughness, as well as effectively maintaining a tensile strength of 700 MPa class.

Next, a method of manufacturing a steel plate for a low temperature pressure vessel having excellent ductility and low temperature toughness according to another aspect of the present invention will be described.

As a steel material for a pressure vessel according to another aspect of the present invention, a steel slab that satisfies the alloy composition proposed in the present invention may be manufactured through the processes of [reheating-hot rolling and cooling-heat treatment and cooling-tempering]. Hereinafter, the respective process conditions will be described in detail.

### Reheating of steel slab

First, a steel slab satisfying the above-described alloy composition is heated to a temperature ranging from 1050 to 1250°C. In this case, if the reheating temperature is less than 1050°C, it is difficult to dissolve solute atoms, whereas if the reheating temperature exceeds 1250°C, the austenite grain size becomes too coarse, impairing the properties of the steel, which is not preferable.

### Hot rolling and primary cooling

Subsequently, in the present invention, the reheated steel slab is hot-rolled to manufacture a hot-rolled steel plate. In this case, the hot rolling is performed at a reduction ratio of 5 to 30% per pass.

If the reduction ratio per pass during the hot rolling is less than 5%, there is a problem in that manufacturing costs may increase due to a decrease in rolling productivity. On the other hand, if the reduction ratio per pass during the hot rolling exceeds 30%, it may cause a fatal adverse effect on the equipment by generating a load on the rolling mill, which is not preferable. The finish rolling is performed at a temperature of 800°C or higher. Rolling to a temperature of less than 800°C causes a load on the rolling mill, which is not preferable.

A process of primary cooling (water cooling) is performed at a cooling rate of 2.5 to 50°C/sec within 30 seconds after hot rolling. If it exceeds 30 seconds before cooling after hot rolling, the temperature of the steel plate is excessively lowered, resulting in low hardenability, such that the required bainite + martensite structure may not be obtained. In addition, if the cooling rate is less than 2.5°C/sec, a ferrite structure may be obtained, and to obtain a cooling rate exceeding 50°C/sec, cooling equipment more than necessary is required, which are not preferable.

### Heat treatment and secondary cooling

The primary cooled hot-rolled steel plate is subjected to heat treatment at a predetermined temperature for a predetermined time. In detail, the heat treatment is maintained for {(2.4×t)+(10-30)} minutes (where t is the thickness (unit: mm) of the steel plate) at a temperature ranging from 690 to 760°C.

If the temperature during the heat treatment is less than 690°C, it is difficult to perform re-solid solution of solute elements in solid solution, and thus, it may be difficult to secure the target strength, whereas if the temperature exceeds 760°C, grain growth occurs, and thus, the low-temperature toughness may be deteriorated.

If the holding time during heat treatment in the above-described temperature range is less than {(2.4×t)+10} minutes, it is difficult to homogenize the structure, whereas if it exceeds {(2.4×t)+30} minutes, productivity is impaired, which is not preferable.

Then, in the present invention, secondary cooling (water cooling) of the heat-treated hot-rolled steel plate is performed to room temperature at a cooling rate of 2.5 to 50°C/s.

If the cooling rate is less than 2.5°C/s during the cooling, there is a concern that coarse ferrite grains may be generated, and if the cooling rate exceeds 50°C/s, it may not be preferable because the economy is impaired by excessive cooling equipment.

### Tempering

Subsequently, in the present invention, the secondary cooled hot-rolled steel plate is tempered for {2.4×t + (10-30) } minutes [where t is the thickness (mm) of the steel material] at a temperature of 600 to 670°C. If the temperature is less than 600°C during the tempering treatment, it may be difficult to secure the target strength due to the difficulty of precipitation of fine precipitates. On the other hand, if the temperature exceeds 670°C, the growth of the precipitate occurs and there is a concern that strength and low temperature toughness may be impaired.

If the retention time during the tempering treatment in the above-described temperature range is less than {(2.4×t)+10} minutes, it may be difficult to homogenize the structure, whereas if it exceeds {(2.4×t)+30} minutes, it is not preferable because productivity is impaired.

The steel microstructure obtained by the tempering process is comprised of 15 to 80 area fractions (%) of tempered bainite and the balance tempered martensite.

### [Mode for Invention]

Hereinafter, the present invention will be described in more detail through examples.

### (Example)

After preparing the respective steel slabs having the composition components illustrated in Table 1, these steel slabs were respectively reheated at a temperature ranging from 1050 to 1250°C. In addition, each of these reheated steel plates was hot-rolled at a reduction ratio of 5 to 30% per pass, and at this time, the hot rolling end temperature was controlled as illustrated in Table 2. Then, each of the hot-rolled steel plates was primarily cooled under the conditions of Table 2 within 30 seconds after hot-rolling, and then, was subjected to heat treatment under the conditions of Table 2. Subsequently, the heat-treated hot-rolled steel plate was secondarily cooled to room temperature, and then, the secondary cooled steel plate was tempered under the conditions illustrated in Table 2.

As described above, the yield strength, tensile strength, and low-temperature toughness were evaluated for the manufactured steel plates, and the results are also illustrated in Table 2 below. On the other hand, in Table 2 below, the low-temperature toughness is a result of evaluating with the Charpy impact energy value obtained by performing a Charpy impact test on a specimen having a V notch at -150°C. In addition, tensile tests for measuring tensile strength and yield strength were conducted in accordance with ASTM A20, A370 and E8.

**[Table 1]**

| Steel Grade | Composition Component(weight%) | | | | | | | |
|---|---|---|---|---|---|---|---|---|
| | C | Mn | Si | Al | P | S | Ni | In |
| Inven tive Steel a | 0.10 | 0.52 | 0.29 | 0.032 | 0.009 | 0.0012 | 4.49 | 0.08 |
| Inven tive Steel b | 0.09 | 0.55 | 0.27 | 0.029 | 0.008 | 0.0010 | 4.45 | 0.05 |
| Inven tive | 0.10 | 0.50 | 0.28 | 0.033 | 0.010 | 0.0011 | 4.85 | 0.07 |
| Inven tive Steel b | 0.09 | 0.55 | 0.27 | 0.029 | 0.008 | 0.0010 | 4.45 | 0.05 |
| Inven tive Steel c | 0.10 | 0.50 | 0.28 | 0.033 | 0.010 | 0.0011 | 4.85 | 0.07 |
| Compa rativ e Steel d | 0.11 | 0.50 | 0.29 | 0.030 | 0.012 | 0.0012 | 4.20 | - |

**[Table 2]**

| Classi ficati on | Steel Grade | A* | B* | C* | D* | E* | F* | G* | YS (MPa ) | TS (MPa ) | EL(% ) | H* |
|---|---|---|---|---|---|---|---|---|---|---|---|---|
| IE 1 | a | 850 | 15.0 | 730 | 50 | 630 | 1.5 | 65 | 658 | 718 | 38 | 256 |
| IE 2 | | 860 | 8.5 | 740 | 90 | 640 | 2.0 | 60 | 657 | 722 | 36 | 251 |
| IE 3 | b | 850 | 15.0 | 750 | 50 | 630 | 1.5 | 68 | 658 | 720 | 35 | 227 |
| IE 4 | | 860 | 8.5 | 730 | 90 | 640 | 2.0 | 57 | 657 | 715 | 37 | 233 |
| IE 5 | c | 850 | 15.0 | 720 | 50 | 630 | 1.5 | 68 | 660 | 725 | 38 | 230 |
| IE 6 | | 850 | 8.5 | 730 | 90 | 640 | 2.0 | 65 | 651 | 730 | 38 | 215 |
| CE 1 | a | 850 | Air cooling | - | - | 630 | 1.5 | 0 | 565 | 633 | 22 | 54 |
| CE 2 | | 860 | Air cooling | - | - | 640 | 2.0 | 0 | 562 | 621 | 21 | 35 |
| CE 3 | d | 860 | 10.0 | 720 | 50 | 630 | 1.5 | 35 | 540 | 655 | 24 | 85 |
| CE 4 | | 860 | 7.5 | 730 | 90 | 640 | 2.0 | 30 | 543 | 648 | 26 | 86 |
| CE 5 | | 850 | Air cooling | - | - | 630 | 1.5 | 0 | 528 | 623 | 25 | 55 |
| CE 6 | | 850 | Air cooling | - | - | 640 | 2.0 | 0 | 522 | 616 | 23 | 48 |

-In Table 2, IE is Inventive Example, CE is Comparative Example, A* is the hot rolling end temperature (°C), B* is the primary cooling (water cooling) rate (°C/s), C* is the heat treatment temperature (°C), D* is the heat treatment time (min.), E* is the tempering temperature (°C), F* is the tempering time (hr), G* is the tempered bainite fraction (%), and H* is the -150°C impact toughness value (J).

As illustrated in Tables 1 and 2, in the case of Inventive Examples 1-6 in which the steel composition components and manufacturing process conditions satisfy the scope of the present invention, after tempering treatment, 15-80 area% of tempered bainite and the remainder tempered martensite structure may be obtained, and thus, it can be seen that the yield strength and tensile strength are excellent by about 100 MPa and 80 MPa, respectively, compared to Comparative Examples 1-6, and further, the elongation is excellent by 10% or more, and the -150°C low-temperature toughness is also excellent by 100 J or more, compared to Comparative Examples 1-6.

Meanwhile, in Comparative Examples 1 and 2 in which the steel composition component range proposed in the present invention is satisfied, but the manufacturing process conditions are out of the scope of the present invention, and in Comparative Examples 2 to 4 in which steel manufacturing process conditions are within the scope of the present invention, but the steel composition component is outside the scope of the present invention; it can be seen that it is difficult to secure a required microstructure and secure required physical properties.

In addition, in Comparative Examples 5 and 6, in which not only the steel composition components but also the manufacturing process conditions are outside the scope of the present invention, it can be confirmed that it is difficult to secure a required microstructure and secure required physical properties.

As described above, in the detailed description of the present invention, exemplary embodiments of the present invention have been described, but various modifications may be made by those of ordinary skill in the art to which the present invention pertains. Therefore, the scope of the present invention is determined by the appended claims.

## Claims

1. A steel plate for a low temperature pressure vessel having excellent cryogenic toughness and ductility, comprising:
in weight%, 0.05 to 0.15% of C, 0.20 to 0.40% of Si, 0.3 to 0.6% of Mn, 0.001 to 0.05% of Al, 0.012% or less of P, 0.015% or less of S, 4.0 to 5.0% of Ni, 0.001 to 0.10% of In, a balance of Fe, and unavoidable impurities,
wherein a steel microstructure is comprised of 15 to 80 area% of tempered bainite and a balance tempered martensite,
wherein the steel plate satisfies a tensile strength of 700 MPa class and may be stably used at a low temperature of -150°C.

2. The steel plate for a low temperature pressure vessel having excellent cryogenic toughness and ductility of claim 1, wherein the In is contained in a range of 0.05 to 0.08 weight%.

3. A method of manufacturing a steel plate of claim 1 for a low temperature pressure vessel having excellent cryogenic toughness and ductility, the method comprising:
reheating a steel slab at 1050 to 1250°C, the steel slab containing, in weight%, 0.05 to 0.15% of C, 0.20 to 0.40% of Si, 0.3 to 0.6% of Mn, 0.001 to 0.05% of Al, 0.012% or less of P, 0.015% or less of S, 4.0 to 5.0% of Ni, 0.001 to 0.10% of In, a balance of Fe, and unavoidable impurities;
hot rolling the reheated steel slab at a reduction ratio of 5 to 30% per pass, and terminating rolling at a temperature of 800°C or higher to manufacture a steel plate ;
primary water cooling the hot-rolled steel plate at a cooling rate of 2.5 to 50°C/sec within 30 seconds after hot rolling;
performing an intermediate heat treatment on the cooled steel plate for {2.4×t + (10-30)} minutes at a temperature of 690 to 760°C, where t is a thickness in mm of the steel plate, and then, secondary water cooling the steel plate to room temperature at a cooling rate of 2.5 to 50°C/sec; and
tempering the secondary cooled steel plate for {2.4×t + (10 - 30)} minutes at a temperature of 600 to 670°C, where t is a thickness in mm of the steel plate.

4. The method of manufacturing a steel plate for a low temperature pressure vessel having excellent cryogenic toughness and ductility, of claim 3, wherein a steel microstructure obtained by the tempering is comprised of 15 to 80 area% of tempered bainite and a remainder of tempered martensite.

5. The method of manufacturing a steel plate for a low temperature pressure vessel having excellent cryogenic toughness and ductility, of claim 3, wherein the In is contained in an amount of 0.05 to 0.08%.

## Patentansprüche

1. Stahlblech für einen Niedertemperatur-Druckbehälter mit ausgezeichneter kryogener Zähigkeit und Duktilität, umfassend:
in Gew.-% 0,05 bis 0,15 % C, 0,20 bis 0,40 Si, 0,3 bis 0,6 % Mn, 0,001 bis 0,05 % Al, 0,012 % oder weniger P, 0,015 % oder weniger S, 4,0 bis 5,0 % Ni, 0,001 bis 0,10 % In, einen Rest aus Fe und unvermeidbaren Verunreinigungen,
wobei ein Stahlmikrogefüge aus 15 bis 80 Flächen-% angelassenem Bainit und einem Rest aus angelassenem Martensit besteht,
wobei das Stahlblech eine Zugfestigkeit der Klasse 700 MPa erfüllt und stabil bei einer niedrigen Temperatur von -150 °C verwendet werden kann.

2. Stahlblech für einen Niedertemperatur-Druckbehälter mit ausgezeichneter kryogener Zähigkeit und Duktilität nach Anspruch 1, wobei das In in einem Bereich von 0,05 bis 0,08 Gew.-% enthalten ist.

3. Verfahren zur Herstellung eines Stahlblechs nach Anspruch 1 für einen Niedertemperatur-Druckbehälter mit ausgezeichneter kryogener Zähigkeit und Duktilität, wobei das Verfahren Folgendes umfasst:
Wiedererwärmen einer Stahlbramme auf 1050 bis 1250 °C, wobei die Stahlbramme in Gew.-% 0,05 bis 0,15 % C, 0,20 bis 0,40 % Si, 0,3 bis 0,6 % Mn, 0,001 bis 0,05 % Al, 0,012 % oder weniger P, 0,015 % oder weniger S, 4,0 bis 5,0 % Ni, 0,001 bis 0,10 % In, einen Rest aus Fe und unvermeidbaren Verunreinigungen enthält;
Warmwalzen der wiedererwärmten Stahlbramme mit einem Reduktionsverhältnis von 5 bis 30 % pro Durchgang und Beenden des Walzens bei einer Temperatur von 800 °C oder höher zur Herstellung eines Stahlblechs;
primäres Wasserkühlen des warmgewalzten Stahlblechs mit einer Abkühlungsrate von 2,5 bis 50 °C/s innerhalb von 30 Sekunden nach dem Warmwalzen;
Durchführen einer Zwischenwärmebehandlung des gekühlten Stahlblechs während {2,4×t + (10-30)} Minuten bei einer Temperatur von 690 bis 760 °C, wobei t eine Dicke des Stahlblechs in mm ist, und anschließend sekundäres Wasserkühlen des Stahlblechs auf Raumtemperatur mit einer Abkühlungsrate von 2,5 bis 50 °C/s; und
Anlassen des sekundär gekühlten Stahlblechs während {2,4×t + (10 - 30)} Minuten bei einer Temperatur von 600 bis 670 °C, wobei t eine Dicke des Stahlblechs in mm ist.

4. Verfahren zur Herstellung eines Stahlblechs für einen Niedertemperatur-Druckbehälter mit ausgezeichneter kryogener Zähigkeit und Duktilität nach Anspruch 3, wobei ein durch das Anlassen erhaltenes Stahlmikrogefüge aus 15 bis 80 Flächen-% angelassenem Bainit und einem Rest aus angelassenem Martensit besteht.

5. Verfahren zur Herstellung eines Stahlblechs für einen Niedertemperatur-Druckbehälter mit ausgezeichneter kryogener Zähigkeit und Duktilität nach Anspruch 3, wobei das In in einer Menge von 0,05 bis 0,08 % enthalten ist.

## Revendications

1. Plaque d'acier pour un appareil à pression à basse température ayant une ténacité et une ductilité cryogéniques excellentes, comprenant :
en % en poids, 0,05 à 0,15 % de C, 0,20 à 0,40 % de Si, 0,3 à 0,6 % de Mn, 0,001 à 0,05 % d'Al, 0,012 % ou moins de P, 0,015 % ou moins de S, 4,0 à 5,0 % de Ni, 0,001 à 0,10 % d'In, un reste de Fe, et des impuretés inévitables, dans laquelle une microstructure d'acier comprend de 15 à 80 % en aire de bainite revenue et un reste de martensite revenue,
la plaque d'acier satisfaisant une résistance à la traction d'une classe de 700 MPa et pouvant être utilisée de manière stable à une basse température de -150 °C.

2. Plaque d'acier pour un appareil à pression à basse température ayant une ténacité et une ductilité cryogéniques excellentes selon la revendication 1, dans laquelle l'In est contenu dans une plage de 0,05 à 0,08 % en poids.

3. Procédé de fabrication d'une plaque d'acier selon la revendication 1 pour un appareil à pression à basse température ayant une ténacité et une ductilité cryogéniques excellentes, le procédé comprenant :
le réchauffage d'une brame d'acier à 1050 à 1250 °C, la brame d'acier contenant, en % en poids, 0,05 à 0,15 % de C, 0,20 à 0,40 % de Si, 0,3 à 0,6 % de Mn, 0,001 à 0, 05 % d'Al, 0,012 % ou moins de P, 0,015 % ou moins de S, 4,0 à 5,0 % de Ni, 0,001 à 0,10 % d'In, un reste de Fe, et des impuretés inévitables ;
le laminage à chaud de la brame d'acier réchauffée à un taux de réduction de 5 à 30 % par passe, et l'achèvement du laminage à une température de 800 °C ou plus pour fabriquer une plaque d'acier ;
le refroidissement primaire à l'eau de la plaque d'acier laminée à chaud à une vitesse de refroidissement de 2,5 à 50 °C/s en 30 secondes après le laminage à chaud ;
la réalisation d'un traitement thermique intermédiaire sur la plaque d'acier refroidie pendant {2,4 x t + (10 - 30)} minutes à une température de 690 à 760 °C, où t est une épaisseur en mm de la plaque d'acier, puis, le refroidissement secondaire à l'eau de la plaque d'acier à température ambiante à une vitesse de refroidissement de 2,5 à 50 °C/s ; et
le revenu de la plaque d'acier ayant subi un refroidissement secondaire pendant {2,4 x t + (10 - 30)} minutes à une température de 600 à 670 °C, où t est une épaisseur en mm de la plaque d'acier.

4. Procédé de fabrication d'une plaque d'acier pour un appareil à pression à basse température ayant une dureté et une ductilité cryogéniques excellentes, selon la revendication 3, dans lequel une microstructure d'acier obtenue par le revenu comprend de 15 à 80 % en aire de bainite revenue et un reste de martensite revenue.

5. Procédé de fabrication d'une plaque d'acier pour un appareil à pression à basse température ayant une ténacité et une ductilité cryogéniques excellentes, selon la revendication 3, dans lequel l'In est contenu dans une quantité de 0,05 à 0,08 %.
